Europäisches Patentamt

European Patent Office

Office européen des brevets

(11) Veröffentlichungsnummer: **0 618 884 B1**

(12) **EUROPÄISCHE PATENTSCHRIFT**

(45) Veröffentlichungstag der Patentschrift: **27.09.95**

(51) Int. Cl.⁶: **C02F 3/20**, B01D 69/12, B01D 71/64

(21) Anmeldenummer: **93900099.8**

(22) Anmeldetag: **16.12.92**

(86) Internationale Anmeldenummer:
**PCT/EP92/02924**

(87) Internationale Veröffentlichungsnummer:
**WO 93/13022 (08.07.93 93/16)**

(54) **BLASENFREIER WASSERSTOFFEINTRAG IN WÄSSRIGE FLÜSSIGKEITEN.**

(30) Priorität: **21.12.91 DE 4142502**

(43) Veröffentlichungstag der Anmeldung:
**12.10.94 Patentblatt 94/41**

(45) Bekanntmachung des Hinweises auf die
Patenterteilung:
**27.09.95 Patentblatt 95/39**

(84) Benannte Vertragsstaaten:
**AT BE CH DE DK ES FR GB GR IE IT LI LU NL
PT SE**

(56) Entgegenhaltungen:
**EP-A- 0 113 574
EP-A- 0 291 679
EP-A- 0 359 074
EP-A- 0 448 973
WO-A-87/00517**

(73) Patentinhaber: **Solvay Umweltchemie GmbH**
**Hans-Böcker-Allee 20**
**D-30173 Hannover (DE)**

Patentinhaber: **GKSS-FORSCHUNGSZENTRUM
GEESTHACHT GMBH
Max-Planck-Strasse
D-21502 Geesthacht (DE)**

(72) Erfinder: **SELL, Michael
Weissdornstr. 46
D-3150 Peine (DE)**
Erfinder: **BISCHOFF, Michael
Inselwall 1
D-3300 Braunschweig (DE)**
Erfinder: **MANN, Andreas
Freundallee 1a
D-3000 Hannover 1 (DE)**
Erfinder: **BEHLING, Rolf-Dieter
Bramweg 14
D-2000 Hamburg 55 (DE)**
Erfinder: **PEINEMANN, Klaus-Viktor
Bellevueberg 34
D-2054 Geesthacht (DE)**
Erfinder: **KNEIFEL, Klemens
Schulstr. 10
D-2054 Geesthacht (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

(74) Vertreter: **Lauer, Dieter, Dr.**
**c/o Solvay Deutschland GmbH**
**Hans-Böckler-Allee 20**
**D-30173 Hannover (DE)**

## Beschreibung

Die Erfindung bezieht sich auf ein Verfahren zum blasenfreien Eintrag von Wasserstoff in wäßrige Flüssigkeiten über eine Membran.

In einer Reihe von chemischen, biologischen, biochemischen und anderen technischen Verfahren ist es notwendig, Wasserstoff in wäßrige Flüssigkeiten einzutragen, beispielsweise bei der biologischen oder durch Katalysatoren geförderten Reduktion von Substanzen mit Wasserstoff, z.B. der biologischen oder katalysierten Reduktion von Sauerstoff, Nitrit oder Nitrat in Wasser.

Allgemein kann der Wasserstoffeintrag blasenförmig oder blasenfrei erfolgen. Die blasenförmige Begasung ist zwar sehr einfach durchzuführen, aber ineffizient. Der blasenfreie Gaseintrag gestattet demgegenüber eine bessere Ausnutzung des einzutragenden Gases. Der blasenfreie Eintrag von Wasserstoff über eine Membran in Wässer, die Nitrit und/oder Nitrat enthalten, mit dem Zweck, diese gesundheitsschädlichen Bestandteile unter selektiver Stickstoffbildung katalytisch zu entfernen, ist aus der EP-A 359 074 bekannt. Der als vorteilhaft erkannte blasenfreie Eintrag des Gases erfolgt über porenfreie, unverstärkte oder gewebeverstärkte Silikonschläuche bzw. Silikonflachmembranen. Diese Silikonschläuche sind trotz großer Wanddicken mechanisch wenig belastbar.

Die deutsche Offenlegungsschrift DE-OS 35 44 382 beschreibt ein Verfahren zur Sauerstoffversorgung von Bioreaktoren und eine dafür verwendbare Vorrichtung. Der Sauerstoff wird blasenfrei durch eine porenfreie Siliconmembran mit einer Gewebeverstärkung in die Wasserphase eingetragen. Die dort als "dünnwandig" bezeichneten Siliconschläuche weisen eine Wanddicke von 0,2 bis 0,5 mm auf. Die Transportrate für Gase ist gering. Bei Anwendung sehr hoher Drücke verbessert sich zwar die Gaseintragsrate, es besteht jedoch eine erhöhte Gefahr der Blasenbildung. Auch der Austrag von im Wasser gelösten Gasen ist gering.

Die europäische Patentanmeldung EP 0 448 973 A1 beschreibt eine spiralförmig aufgewickelte Membran zum Gaseintrag in Wasser. Das mit jener Membran einzutragende Gas ist nicht besonders eingeschränkt; Sauerstoff und Kohlendioxid sind bevorzugt. Die Membran umfaßt eine Trägerstruktur aus porösem Polymer mit einer homogenen Schicht, die mit dem Wasser in Kontakt steht.

Der Erfindung liegt die Aufgabe zugrunde, ein verbessertes Verfahren zum blasenfreien Eintrag von Wasserstoff in wäßrige Flüssigkeiten anzugeben. Diese Aufgabe wird durch das in den Ansprüchen wiedergegebene erfindungsgemäße Verfahren gelöst.

Das erfindungsgemäße Verfahren zum blasenfreien Eintrag von Wasserstoff in wäßrige Flüssigkeiten, wobei man den Wasserstoff über eine Membran in die wäßrige Flüssigkeit einträgt, ist dadurch gekennzeichnet, daß man eine Membran verwendet, umfassend a) eine aus porösem Polymer gebildete Trägerstruktur mit integralasymmetrischer Struktur und mikroporöser Schicht, und b) mindestens eine Schicht aus porenfreiem Polymer, wobei die wäßrige Flüssigkeit auf der Seite der Schicht aus porenfreiem Polymer mit der Membran in Kontakt steht.

Besonders gut geeignet sind Komposit-Membranen mit integral-asymmetrischem Aufbau. Sie umfassen eine aus porösem Polymer gebildete Trägerstruktur mit mikroporöser Schicht und mit einer porenfreien Beschichtung. Solche Membranen und ihre Herstellung werden in der EP-A 291 679 (US-A 4 933 085) beschrieben.

Die Trägerstruktur mit mikroporöser Schicht wird üblicherweise in einem Schritt hergestellt und vorzugsweise aus hydrophoben wasserbeständigen Polymeren wie z.B. Polysulfonen, z.B. Polyethersulfonen, Polyamiden, Polyimiden oder insbesondere Polyetherimid gebildet.

Die im erfindungsgemäßen Verfahren eingesetzten integralasymmetrischen Komposit-Membranen weisen folgenden Aufbau auf:
Eine Seite der Membran wird durch eine porenfreie Schicht aus hydrophobem Polymer gebildet. In Richtung auf die andere Seite der Membran folgt dann üblicherweise eine mikroporöse Haut. Es schließt sich dann entweder eine kavernenhaltige Struktur ("Fingerstruktur") oder eine kavernenfreie Schwammstruktur an. Kavernenhaltige Strukturen sind besser für niedrige Drücke geeignet, Schwammstrukturen sind besser für höhere Drücke geeignet. Die Dicke der porösen kavernenhaltigen oder schwammartigen Struktur kann mehr oder weniger schwanken, je nach gewünschter Stabilität der Membran. Zweckmäßig liegt die Dicke im Bereich von 15 bis 200 Mikrometer.

Üblicherweise stellt man zunächst die integral-asymmetrische Membran her, deren mikroporöse Schicht mit einer Schicht aus hydrophobem, porenfreiem Polymer belegt wird. Gut geeignet sind beispielsweise Schichten aus Polymethylpenten und Siliconpolymer, insbesondere Schichten aus Polydialkylsiloxanen, z.B. aus Polydimethylsiloxan. Die Dicke dieser porenfreien Schicht liegt zwischen 0,1 bis 100 Mikrometer, vorzugsweise zwischen 0,5 und 10 Mikrometer.

Die Herstellung von integral-asymmetrischen Membranen und Komposit-Membranen, sofern sie nicht käuflich erhältlich sind, wird z.B. in der EP-A 291 679 beschrieben.

Die Membran kann als Flachmembran, Rohrmembran (Durchmesser 4 bis 15 mm oder mehr) oder vorzugsweise als Hohlfadenmembran ausgebildet sein.

Verwendet man eine Hohlfadenmembran im erfindungsgemäßen Verfahren, so liegt der Innendurchmesser zweckmäßig im Bereich von 0,2 bis 4 mm.

Die Dimension der integral-asymmetrischen Membranen, auch in Bezug auf die Länge, kann je nach Wunsch variieren. Man kann eine Mehrzahl oder Vielzahl einzelner Membranen auch zu Modulen bzw. Kassetten anordnen.

Es wurde bereits ausgeführt, daß die wäßrige Flüssigkeit auf der Seite der porenfreien Schicht mit der Membran kontaktiert wird. Dabei wird zweckmäßig die Flüssigkeit an der Schicht vorbeigeführt. Besonders vorteilhaft geschieht dies in turbulenter Strömung, da dann der Stoffaustausch noch verbessert wird.

Sofern man eine hohlfadenförmige Membran anwendet, kann die porenfreie Schicht im Innern des Fadens (die wäßrige Flüssigkeit wird dann durch den Faden durchgeleitet) oder auf der Außenseite des Fadens (die wäßrige Flüssigkeit umspült dann die Faser) angeordnet sein. (Selbstverständlich könnte man auch eine Membran verwenden, die beidseitig eine porenfreie Schicht aufweist.) Bevorzugt verwendet man eine hohlfadenförmige Membran, deren porenfreie Schicht auf der Innenseite angeordnet ist und bei der die wäßrige Flüssigkeit durch das Lumen des Fadens durchgeleitet wird. Es lassen sich vorteilhaft turbulente Bedingungen einstellen.

Die Gaseintragsrate ist von verschiedenen Faktoren abhängig. Die treibende Kraft für den vertritt des Gases in die wäßrige Phase ist das Partialdruckgefälle des einzutragenden Gases zwischen Gasphase und wäßriger Phase. Je höher der Druckunterschied auf der Gasseite, desto höher ist die Gaseintragsrate. Bei zu hohem Druckunterschied kann allerdings die Membran Schaden nehmen, außerdem könnte es zu unerwünschter Blasenbildung kommen. Zweckmäßig arbeitet man deshalb unterhalb des Druckes, bei dem eine unerwünschte Blasenbildung einsetzt. Der Wasserstoffdruck muß höher sein als der Partialdruck des Wasserstoffs im Wasser. Zweckmäßig liegt der Differenzdruck zwischen Wasserstoffgas und Wasser unterhalb von 10 Bar. Gewünschtenfalls kann man die wäßrige Flüssigkeit zunächst einem Vordruck unterwerfen, bevor sie mit der Membran kontaktiert wird. Die Löslichkeit des einzutragenden Gases wird dadurch verbessert.

Da für die Entstehung unerwünschter Gasblasen beim Begasungsvorgang die Summe der Partialdrücke der im Wasser gelösten Gase von Bedeutung ist, kann es vorteilhaft sein, andere im Wasser gelöste Gase zunächst zu entfernen, beispielsweise durch Vakuumentgasung oder durch Adsorber. Der Austrag von im Wasser gelösten Gasen erfolgt auch durch die verwendete Membran hindurch. Der Austrag der Gase wird durch die Permeabilität der Membran kontrolliert, wobei das Partialdruckgefälle für das betreffende Gas zwischen der wäßrigen und der gasförmigen Phase als treibende Kraft wirkt. Die sehr dünne porenfreie Schicht der verwendeten Komposit-Membran wirkt sich sehr günstig aus. Durch das aus dem Wasser in den Gasraum eingetragene unerwünschte Gas wird natürlich die Konzentration bzw. der Partialdruck des in das Wasser einzutragenden Wasserstoffs verringert. Die geringen Mengen des aus dem Wasser ausgetragenen Gases wirken sich aber kaum aus. In Fällen, in denen im Verhältnis zu dem Volumen des Gasraumes viel Gas aus dem wäßrigen Medium in diesen Gasraum transportiert wird, kann sein Einfluß dadurch begrenzt werden, daß das über die Membran in den Gasraum eingetretene Gas durch kontinuierliches oder diskontinuierliches Spülen entfernt wird. Auch das Anordnen eines für die jeweilige Gasart (überwiegend Sauerstoff, Stickstoff und Kohlendioxid) geeigneten Absorbermaterials im Gasraum ist möglich. Evtl. durch die Membran permeirender Wasserdampf kann ebenfalls durch Spülen oder Absorption entfernt werden.

Vorzugsweise wird das erfindungsgemäße Verfahren zum Eintragen von Wasserstoff mit Verfahren kombiniert, in welchen der Wasserstoff als Elektronendonor bzw. als Reduktionsmittel fungiert. Dies können beispielsweise katalysierte oder nichtkatalysierte chemische Verfahren oder auch biologische Verfahren sein. Besonders bevorzugt ist eine Kombination des erfindungsgemäßen Verfahrens zum Eintrag von Wasserstoff mit Verfahren, in welchen der Sauerstoffgehalt, der Nitritgehalt und/oder der Nitratgehalt mittels Wasserstoff biologisch, beispielsweise im Rahmen der autotrophen Denitrifikation, oder katalytisch reduziert werden soll. Sauerstoffarmes Wasser wird beispielsweise wegen der verringerten Korrosivität benötigt. Auch in anderen Anwendungsbereichen wird sauerstoffarmes Wasser benötigt, z.B. in der Getränkeindustrie. Die Verringerung des Nitrit- bzw. Nitratgehaltes ist besonders in Wässern unerwünscht, die in verschiedenen Formen (als Grundwasser, Trinkwasser, Wasser für die Getränke- und Lebensmittelherstellung) für die menschliche Ernährung benötigt werden. Es kann auch wünschenswert sein, den Nitrit- bzw. Nitratgehalt in Brauchwässern oder Abwässern zu reduzieren.

Ein katalytisch arbeitendes Verfahren zur Verringerung des Nitrit- bzw. Nitratgehaltes wird in der schon erwähnten EP-A 359 074 (= US-A 4 990 266) beschrieben. Bei jenem Verfahren wird der Nitrit- und/oder Nitratgehalt aus belastetem Wasser unter selektiver $N_2$-Bildung entfernt. Hierzu wird Wasserstoff in das Wasser eingetragen und das Wasser dann mit einem Katalysator kontaktiert. Dieser Katalysator weist als aktive Metalle Palladium und/oder Rhodium oder nur Palladium als Edelmetall und ein Metall der Kupfergruppe auf einem porösen Träger auf. Der Wasserstoff wird dabei bevorzugt in einer solchen Menge in das Wasser eingetragen, welche mindestens der zur Reduktion des vorbestimmten Gehaltes an Sauerstoff und Nitrit und/oder Nitrat stöchiometrisch notwendigen Menge und höchstens einem 20 %igen Überschuß entspricht. Der Sauerstoffgehalt, der Nitrit- bzw. Nitratgehalt des Wassers kann in einem weiten Bereich schwanken, beispielsweise zwischen 0 und 10 ppm (Sauerstoff), 0 und 50 ppm (Nitrit) und 0 bis 500 ppm (Nitrat).

Das Verfahren wird vorzugsweise kontinuierlich durchgeführt. Hierzu wird das nitrit- und/oder nitratbelastete Wasser mit einem vorbestimmten Gehalt an Sauerstoff, Nitrit und/oder Nitrat kontinuierlich über eine die Durchflußgeschwindigkeit regulierende Pumpe mit variabler Förderleistung durch eine oder mehrere Reaktionseinheiten geführt, welche je einen Begasungsbehälter und einen Reaktor umfassen, wobei das Wasser zunächst in den Begasungsbehälter geführt und darin nach dem erfindungsgemäßen Verfahren mit Wasserstoffgas gegebenenfalls unter Druck begast und innig vermischt wird und anschließend durch den an Katalysatorbett mit dem Katalysator enthaltenden Reaktor geführt. Gewünschtenfalls kann man das belastete Wasser zunächst in einen Dosierbehälter einleiten, in welchem der pH-Wert kontrolliert und nötigenfalls durch Zusatz von Säure auf einen Wert von höchstens pH 8 eingestellt wird. Zur Keimtötung kann man das Wasser vor der Begasung durch eine Entkeimungsvorrichtung, beispielsweise eine UV-Durchflußlampe leiten. Man kann Begasung und katalytische Umsetzung so oft wiederholen, wie zur Reduktion des Sauerstoffgehaltes und des Nitrit- und/oder Nitratgehaltes im Wasser notwendig ist. Das denitrifizierte Wasser kann gewünschtenfalls mit Sauerstoff versetzt werden.

Eine Anlage zur Durchführung dieses Verfahrens zur Entfernung des Nitrit- und/oder Nitratgehaltes aus Wasser umfaßt eine oder mehrere Reaktionseinheiten, welche gebildet sind aus je einem Begasungsbehälter, welcher mit einem Flüssigkeitseinlaß für das Wasser und an dem gegenüberliegenden Ende mit einem Flüssigkeitsauslaß für das Wasser versehen ist und eine Membran, vorzugsweise in Modulform, umfaßt, welche a) eine aus porösem Polymer gebildete Trägerstruktur und b) eine Schicht aus hydrophobem, porenfreiem Polymer umfaßt, und einen über diese Membran führenden Einlaß für Wasserstoffgas besitzt, und damit verbunden je einem ein Katalysatorbett mit einem den vorbeschriebenen Katalysator enthaltenden Reaktor, welcher einen Flüssigkeitseinlaß für das Wasser und einen Flüssigkeitsauslaß für das Wasser besitzt und gegebenenfalls mit einer pH-Meß- und Regeleinrichtung versehen ist. Die Anlage kann weiterhin einen Dosierbehälter umfassen, welcher einen Flüssigkeitseinlaß zum Einführen des Wassers und einen Füssigkeitsauslaß zum Abführen des Wassers besitzt und gegebenenfalls mit einer pH-Meß- und -Regelkette versehen ist. Weiterhin kann gewünschtenfalls eine Entkeimungsvorrichtung, vorzugsweise eine UV-Durchflußlampe vorgesehen sein. Weiterhin sind Rohrleitungen zum Transport des Wassers in die verschiedenen Vorrichtungteile vorhanden. Die Begasungsbehälter sind zweckmäßig dicht am Reaktor angeordnet. Alternativ kann das Begasungsmodul auch direkt im Reaktor angeordnet sein.

Die Erfindung weist den großen Vorteil auf, daß die Begasung mit Wasserstoff mit den erfindungsgemäß zu verwendenden Komposit-Membranen um den Faktor 100 größer ist als beispielsweise bei den im Verfahren der EP-A 359 074 verwendeten Silikonschläuchen. Ein weiterer Vorteil ist, daß im Wasser gelöste Gase durch die Komposit-Membran leich permeieren können. Dadurch wird ein noch höherer Eintrag von Wasserstoff möglich. In einer bevorzugten Ausführungsform, in welcher man hohlfadenförmige Membranen verwendet und das zu begasende Wasser durch die Membran hindurchleitet, bietet sich weiterhin die Möglichkeit, turbulente Bedingungen einzustellen. Dies führt zu einer besonders hohen Wasserstoffeintragsrate. Die Membranen sind vorteilhafterweise auch sehr druckbeständig, der apparative Aufwand ist gering, der Raumbedarf sehr klein. Dadurch ist eine sehr einfache Betriebsführung möglich.

Das folgende Beispiel soll das erfindungsgemäße Verfahren weiter erläutern, ohne es in seinem Umfang einzuschränken.

Beispiel 1:

Eintrag von Wasserstoff im Rahmen der katalytischen Denitrifikation

1.1. Verwendete Membran

Verwendet wurden Komposit-Membranen in Hohlfaden-Form. Die Membranen wurden wie in der EP-A 291 679 (US-A 4 933 085) beschrieben aus Polyetherimid (Ulem 100[R], Hersteller: General Electric) hergestellt und zusätzlich auf der Innenseite mit einer porenfreien Schicht aus Polydimethylsiloxan (VP 7660, Hersteller: Wacker Chemie, München) versehen. Die Hohlfäden wurden auf eine Länge von 33 cm geschnitten. Ihr Außendurchmesser betrug 1,2 mm, der Innendurchmesser 1,0 mm. Der Berstdruck bei Druckbeaufschlagung im Innern der Fäden betrug 20 bar, der Berstdruck bei Druckbeaufschlagung von außen betrug 7 bar.

1.2.1. Verwendetes Hohlfadenmembranmodul

400 der unter Beispiel 1.1. beschriebenen Hohlfäden mit einer Schicht aus Polydimethylsiloxan auf der Innenseite wurden zu einem Modul zusammengefaßt. Die Membranfläche betrug 0,415 m$^2$.

1.2.2. Verwendete Apparatur

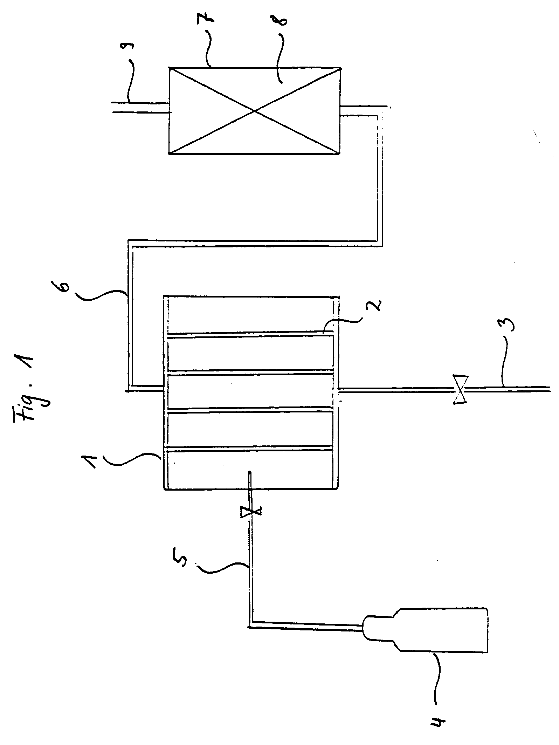

Die Apparatur wird in Figur 1 wiedergeben (Einrichtungen zur Druck- und Konzentrationsmessung sowie Pumpen sind der Übersichtlichkeithalber weggelassen).
Das in 1.2.1. beschriebene Modul 1 mit den Hohlfäden 2 weist eine Zuleitung 3 auf, welche mit einer Wasserpumpe verbunden ist. Über diese Wasserpumpe kann Brunnenwasser in die Apparatur gepumpt werden.
Eine Wasserstoff-Druckflasche 4 ist über ein Ventil und die Leitung 5 mit dem die Hohlfäden 2 des Moduls 1 umgebenden Raum verbunden. Eine Leitung 6 ist über einen (nicht eingezeichneten) Sammler mit den Hohlfäden 2 verbunden. Die Leitung 6 führt in einen Reaktor 7, der eine Katalysatorschüttung 8 aufweist.
Das katalytisch behandelte Wasser kann aus dem Reaktor 7 über eine Auslaßleitung 9 abgeleitet werden. Als Katalysator diente eine Trägerkatalysatorschüttung, gebildet aus Partikeln auf Basis von Aluminiumoxid, imprägniert mit Palladium und Kupfer entsprechend der Lehre der EP-A-0 359 074.

1.2.3. Verfahrensdurchführung

Das Verfahren wurde in einem Wasserwerk zur Trinkwassergewinnung durchgeführt. Das einem Grundwasserbrunnen entnommene Brunnenwasser enthält Nitrat und wies folgende Analysendaten auf:
pH-Wert: 7,1
Temperatur: 10 °C

| Gehalt an | Sauerstoff: | 3,9 mg |
|---|---|---|
| | Nitrat : | 52,0 mg/l |
| | Nitrit : | < 0,01 mg/l |
| | Chlorid : | 67,0 mg/l |
| | Sulfat : | 144,0 mg/l |
| | Hydrogencarbonat: | 262,0 mg/l |

Gesamthärte: 26 dH (deutsche Härte)
Salzgehalt: 790 mg/l
Zur Verbesserung der Wasserstoff-Löslichkeit wurde das Brunnenwasser auf einen Druck von 4 bis 6 bar gebracht. Das Wasser wurde dann bei unterschiedlichen Betriebsbedingungen durch die Hohlfäden des Membranmoduls hindurchgeführt und mit Wasserstoff aus der Druckflasche blasenfrei begast. Die Menge des eingetragenen Wasserstoffs wurde mit einem Meßsystem der Firma Orbisphere ständig gemessen. Die Betriebsbedingungen wie Wasserdurchsatz, Wasserdruck, Druckverlust im Modul, Strömungsgeschwindigkeit im Modul, Volumenstrom des Wasserstoffs, Wasserstoffdruck und die Menge des gelösten Wasserstoffs im Brunnenwasser wurden bestimmt und in Tabelle 1 zusammengestellt.

Tabelle 1: Langzeitversuch zum Wasserstoff-Eintrag bei katalytischer Nitrat-Reduktion

| Versuchs-Nr. | H₂O-Durchsatz [l/H] | Wasser-druck [bar] | Druckver-verlust Modul [bar] | Strömungs-geschw. im Modul [m/s] | H₂-Druck [bar] | Gelöstes H₂ [ml/l] | [1/h] | Nitrat-abbau [mg/l] |
|---|---|---|---|---|---|---|---|---|
| 1.2.3.1. | 950 | 4,35 | 0,25 | 0,84 | 7,5 | 28,8 | 27,4 | 22 |
| 1.2.3.2. | 990 | 4,65 | 0,25 | 0,88 | 7,5 | 44 | 44,4 | 37 |
| 1.2.3.3. | 2010 | 4,4 | 0,35 | 1,77 | 7,5 | 17,9 | 37,6 | 15 |
| 1.2.3.4. | 2010 | 5,5 | 0,35 | 1,77 | 9,0 | 44,8 | 90,0 | 33 |
| 1.2.3.5. | 2000 | 6,0 | 0,35 | 1,76 | 9,0 | 22,7 | 45,4 | 19 |

Das wasserstoffhaltige Wasser wurde dann in den Reaktor durch die Katalysatorschüttung geleitet und katalytisch behandelt. Dabei wurde der Nitrat-Gehalt um 60 bis 90 % reduziert. Das Beispiel beweist, daß sich das erfindungsgemäße Verfahren sehr gut über längere Zeiträume betreiben läßt.

Für die in der Tabelle 1 beschriebenen Versuche lag der Wasserstoffstrom im Bereich von 30 bis 100 l/h, gemessen mit einem Schwebekörper-Durchflußmesser, Firma ROTA.

Der Nitratgehalt wurde wie in Tab. 1 angegeben verringert. Es ist zu ersehen, daß das gelöste $H_2$ vollständig zum Abbau von Nitrat und Sauerstoff verwendet wurde.

Das denitrifizierte, sauerstofffreie Wasser wurde zur Sauerstoffanreicherung im Kreislauf aus einem Behälter über eine Pumpe durch ein Modul aus 8 der gemäß Beispiel 1 hergestellten Hohlfäden durchgeleitet. Die Membranfläche betrug 0,0083 $m^2$. Dabei wurde das Wasser durch den Innenraum der Hohlfäden geleitet. Auf der Außenseite wurden die Hohlfäden mit reinem Sauerstoff beaufschlagt. Die Reynoldzahl des Wassers betrug 3.150. Der Druck vor dem Modul betrug 1,42 bar, nach dem Modul 0,29 bar. Die Temperatur des Wassers war 20 °C. Der Sauerstoffeintrag bei unterschiedlichen Partialdrücken im Gasraum sind in Tabelle 2 zusammengestellt.

Tabelle 2

| Sauerstoffeintrag in Abhängigkeit vom Partialdruck | |
|---|---|
| $P_{02}$ bar | $J_{02}$ (g/$m^2$h) |
| 0,42 | 24 |
| 0,58 | 28 |
| 0,72 | 32 |
| 0,87 | 38 |
| 1,01 | 48 |

**Patentansprüche**

1. Verfahren zum blasenfreien Eintrag von Wasserstoff in wäßrige Flüssigkeiten, wobei man den Wasserstoff über eine Membran in die wäßrige Flüssigkeit einträgt, dadurch gekennzeichnet, daß man eine Membran verwendet, umfassend a) eine aus porösem Polymer gebildete Trägerstruktur mit integralasymmetrischer Struktur und mikroporöser Schicht, und b) mindestens eine Schicht aus porenfreiem Polymer, wobei die wäßrige Flüssigkeit auf der Seite der Schicht aus porenfreiem Polymer mit der Membran in Kontakt steht.

2. Verfahren nach Anspruch 1, dadurch gekennzeichnet, daß die Trägerstruktur der Membran aus Polyetherimid gebildet ist.

3. Verfahren nach einem der vorhergehenden Ansprüche, dadurch gekennzeichnet, daß die porenfreie Schicht aus hydrophobem, porenfreiem Polymer, vorzugsweise Silikonpolymer, besteht.

4. Verfahren nach Anspruch 3, dadurch gekennzeichnet, daß die porenfreie Schicht eine Dicke von 0,1 bis 100 Mikrometer aufweist.

5. Verfahren nach einem der vorgehenden Ansprüche, dadurch gekennzeichnet, daß die Membran als Flachmembran, Rohrmembran oder vorzugsweise als Hohlfaden ausgebildet ist.

6. Verfahren nach Anspruch 3, dadurch gekennzeichnet, daß die Membran als Hohlfaden- oder Rohrmembran ausgebildet ist und die zusätzliche Schicht auf der Innenseite der Membran angeordnet ist.

7. Verfahren nach Anspruch 1, dadurch gekennzeichnet, daß die wäßrige Flüssigkeit ein Sauerstoff, Nitrit und/oder Nitrat enthaltendes Wasser ist, in welchem der Gehalt an Sauerstoff, Nitrit bzw. Nitrat durch den eingetragenen Wasserstoff katalytisch reduziert werden soll.

**Claims**

1. A method for the bubble-free introduction of hydrogen into aqueous liquids, in which the hydrogen is introduced into the agueous liquid via a membrane, characterised in that a membrane is used comprising a) a support structure having an integral-asymmetrical structure and microporous layer, formed of porous polymer, and b) at least one layer of non-porous polymer, the aqueous liquid being in contact with the membrane on the side of the layer of non-porous polymer.

EP 0 618 884 B1

2. A method according to Claim 1, characterised in that the support structure of the membrane is formed from polyetherimide.

3. A method according to one of the preceding Claims, characterised in that the non-porous layer consists of hydrophobic, non-porous polymer, preferably silicone polymer.

4. A method according to Claim 3, characterised in that the non-porous layer has a thickness of 0.1 to 100 micrometres.

5. A method according to one of the preceding Claims, characterised in that the membrane is designed as a flat membrane, tubular membrane or preferably as a hollow filament.

6. A method according to Claim 3, characterised in that the membrane is designed as a hollow filament membrane or tubular membrane and the additional layer is located on the inside of the membrane.

7. A method according to Claim 1, characterised in that the aqueous liquid is water containing oxygen, nitrite and/or nitrate, in which the content of oxygen, nitrite and/or nitrate is to be catalytically reduced by the hydrogen which is introduced.

**Revendications**

1. Procédé pour introduire sans bulle(s) de l'hydrogène dans des liquides aqueux, selon lequel on introduit l'hydrogène à l'aide d'une membrane dans le liquide aqueux, procédé caractérisé en ce que l'on utilise une membrane comprenant (a) une structure de support formée d'un polymère poreux ayant une structure intégrale asymétrique et une couche microporeuse, et (b) au moins une couche d'un polymère sans pores, le liquide aqueux étant en contact avec la membrane du côté de la couche en polymère sans pores.

2. Procédé selon la revendication 1, caractérisé en ce que la structure de support de la membrane est formée en du polyéther-imide.

3. Procédé selon l'une des revendications précédentes, caractérisé en ce que la couche sans pores consiste en du polymère hydrophobe sans pores, avantageusement en un polymère de silicone.

4. Procédé selon la revendication 3, caractérisé en ce que la couche sans pore a une épaisseur de 0,1 à 100 micromètres.

5. Procédé selon l'une des revendications précédentes, caractérisé en ce que la membrane est en forme de membrane plate, de membrane tubulaire ou avantageusement de fils creux.

6. Procédé selon la revendication 3, caractérisé en ce que la membrane est en forme de fils creux ou de membrane tubulaire et la couche supplémentaire est disposée sur le côté intérieur de la membrane.

7. Procédé selon la revendication 1, caractérisé en ce que le liquide aqueux est une eau contenant de l'oxygène, du nitrite et/ou du nitrate, dans laquelle la teneur en oxygène, en nitrite ou en nitrate doit être abaissée catalytiquement par l'hydrogène introduit.

9

Fig. 1

EP 0 618 884 B1